# EUROPEAN PATENT APPLICATION

(11) **EP 4 484 492 A1**
(43) Date of publication of application: **01.01.2025**
(21) Application number: 23912802.8
(22) Date of filing: 22.12.2023
(51) Int. Cl.: C08L 23/08, C08F 210/16, C08F 2/04, C08J 5/18

(54) **POLYETHYLENE RESIN COMPOSITION**

(30) Priority: 29.12.2022 KR 20220189079; 20.12.2023 KR 20230187175
(71) Applicant: LG Chem, Ltd., Yeongdeungpo-gu Seoul 07336 (KR)
(72) Inventor: KIM, Na Un, Daejeon 34122 (KR); CHOI, Yi Young, Daejeon 34122 (KR); YOON, Jiwon, Daejeon 34122 (KR)
(74) Representative: Hoffmann Eitle
(86) International application number: PCT/KR2023/021366
(87) International publication number: WO 2024/144127

(57) **Abstract**

Provided are a polyethylene resin composition having excellent stretchability and physical properties, and a biaxially stretched film using the same.

## Description

### [TECHNICAL FIELD]

### Cross-reference to Related Application

The present application is based on, and claims priority from, Korean Patent Application Nos. 10-2022-0189079 and 10-2023-0187175, filed on December 29, 2022 and December 20, 2023, respectively, the disclosures of which are hereby incorporated by reference herein in their entirety.

The present invention relates to a polyethylene resin composition having excellent stretchability and physical properties.

### [BACKGROUND ART]

With the recent increase in consumer concern for the environment, single-material packaging that is easy to recycle is attracting attention. Representatively, in the food packaging and distribution industry, there is a trend to manufacture "All-PE" films using only polyethylene (PE) which is a general-purpose material.

Previously, composite materials with BOPA, BOPET, BOPP, etc. applied to a printing layer have been used in multi-layer film packaging materials. In order to replace the composite materials by PE, they require higher physical properties than existing PE blown films.

Meanwhile, biaxially oriented polyethylene (BOPE) films are manufactured by stretching cast sheets in both the machine direction (MD) and the transverse direction (TD), and have remarkably better tensile strength, impact strength, and transparency than existing blown films.

However, traditional development of BOPE resins has been focused on linear low-density polyethylene (LLDPE), which has excellent stretching characteristics due to low density. However, when BOPE films are manufactured using LLDPE, there is a problem that it is difficult to apply the same to a printing layer due to severe shrinkage and low heat resistance.

Accordingly, research and development are needed to prepare a polyethylene or polyethylene resin composition with a higher density, in which heat resistance, shrinkage characteristics, tensile strength, etc. are improved.

### [DETAILED DESCRIPTION OF THE INVENTION]

### [TECHNICAL PROBLEM]

In order to solve the problems of the prior art, there is provided a polyethylene resin composition exhibiting excellent stretching characteristics when manufacturing a stretched film, and capable of improving tensile strength, shrinkage characteristics, and transparency of the stretched film.

There is also provided a stretched film exhibiting excellent tensile strength property, shrinkage characteristics, and transparency, which is manufactured by using the polyethylene resin composition.

### [TECHNICAL SOLUTION]

In order to achieve the above objects, there is provided a polyethylene resin composition satisfying the following requirements of (a1) to (a6):
(a1) a density measured in accordance with the ASTM D792 standard: 0.940 g/cm³ to 0.965 g/cm³,
(a2) an NCD index calculated according to the following Equation 1: 0 or more,
(a3) a type of a molecular weight distribution curve, when plotting the molecular weight distribution curve having a log value (log M) of a weight average molecular weight (M) (g/mol) on the x-axis, and a molecular weight distribution (dwt/dlog M) with respect to the log value on the y-axis during a gel permeation chromatography analysis: bimodal,
(a4) a content of a highly crystalline fraction eluted at an elution temperature of 100°C or higher, based on the total weight of all eluted fractions, during a temperature rising elution fractionation (TREF) analysis: 35% by weight or more,
(a5) a Z-average molecular weight (Mz): 500,000 g/mol to 800,000 g/mol,
(a6) the number of SCBs per 1000 carbons: more than 3 and 8 or less, NCD index = - (the number of SCBs per 1000 carbons at logMw = 5.5 - the number of SCBs per 1000 carbons at logMw = 4.5)
in Equation 1, Mw represents a weight average molecular weight (g/mol), and SCB represents short chain branches having 2 to 7 carbon atoms which are attached to the main chain of polyethylene.

There is also provided a method of preparing the polyethylene resin composition, the method including a first step of preparing a first polyethylene by performing a first slurry polymerization reaction of ethylene and a first comonomer of a C4 to C10 alpha-olefin while introducing hydrogen in the presence of a Ziegler-Natta catalyst in a first reactor; and a second step of transferring the first polyethylene to a second reactor which is connected to the first reactor, then introducing ethylene alone or ethylene and a C4 to C10 alpha olefin comonomer, and performing a second slurry polymerization reaction, wherein the input amount of the C4 to C10 alpha olefin comonomer introduced during the first slurry polymerization reaction is larger than the input amount of the C4 to C10 alpha olefin comonomer introduced during the second slurry polymerization reaction.

There is also provided a stretched film, specifically, biaxially stretched film, including the polyethylene resin composition.

### [ADVANTAGEOUS EFFECTS]

According to the present invention, provided is a polyethylene resin composition exhibiting excellent stretching characteristics when manufacturing a stretched film, and capable of improving tensile strength, shrinkage characteristics, and transparency of the stretched film.

Provided is also a stretched film exhibiting excellent tensile strength, shrinkage characteristics, and transparency, which is manufactured by using the polyethylene resin composition.

### [BRIEF DESCRIPTION OF THE DRAWINGS]

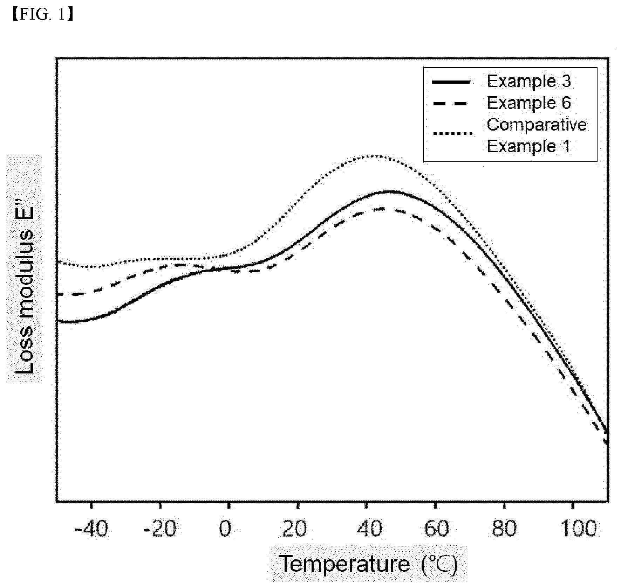

FIG. 1 is a graph observing changes in loss modulus according to temperature during dynamic mechanical analysis (DMA) of polyethylene resin compositions of Examples 3 and 6, and Comparative Example 1.

### [DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, throughout this specification, the term "polyethylene" or "ethylene (co)polymer" includes both an ethylene homopolymer and/or an ethylene and alpha-olefin copolymer.

The present invention may be variously modified and have various forms, and specific exemplary embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a polyethylene resin composition of the present invention will be described in detail.

A polyethylene resin composition according to the present invention satisfies the following requirements of (a1) to (a6):
(a1) a density measured in accordance with the ASTM D792 standard: 0.940 g/cm³ to 0.965 g/cm³,
(a2) an NCD index calculated according to the following Equation 1: 0 or more,
(a3) a type of a molecular weight distribution curve, when plotting the molecular weight distribution curve having a log value (log M) of a weight average molecular weight (M) (g/mol) on the x-axis, and a molecular weight distribution (dwt/dlog M) with respect to the log value on the y-axis during a gel permeation chromatography analysis: bimodal,
(a4) a content of a highly crystalline fraction eluted at an elution temperature of 100°C or higher, based on the total weight of all eluted fractions, during a temperature rising elution fractionation (TREF) analysis: 35% by weight or more,
(a5) a Z-average molecular weight (Mz): 500,000 g/mol to 800,000 g/mol,
(a6) the number of SCBs per 1000 carbons: more than 3 and 8 or less, NCD index = - (the number of SCBs per 1000 carbons at logMw = 5.5 - the number of SCBs per 1000 carbons at logMw = 4.5)
in Equation 1, Mw represents a weight average molecular weight (g/mol) of polyethylene, and SCB represents short chain branches having 2 to 7 carbon atoms which are attached to the main chain of polyethylene.

Usually, biaxially oriented polyethylene (BOPE) films is manufactured by stretching a cast sheet in both machine direction (MD) and transverse direction (TD). As described, since biaxial stretching must be performed from MD stretching to TD stretching, polyethylene for BOPE films requires excellent stretchability.

In order to ensure stretchability in polyethylene, a structure must exist that allows interlamellar lateral linking between lamellae within the polyethylene so that secondary crystallization occurs as late as possible in MD stretching, followed by subsequent TD stretching.

The present inventors found that as the content of SCBs derived from the comonomer in the low molecular weight region of the polyethylene resin composition increases, and fluidity of tie molecules between crystals increases, fibril formation is suppressed during the film stretching process, and thus it may exhibit excellent stretchability, and may be more advantageous for stretching in the TD direction, and they completed the present invention by controlling the molecular structure within the polyethylene resin composition.

Further, in the present invention, the molecular structure with the high content of SCBs derived from the comonomer in the low molecular weight region as described above, i.e., normal comonomer distribution (NCD) structure is parameterized by the NCD index as in Equation 1, and optimized to the range exhibiting excellent stretchability.

Meanwhile, the NCD structure defined in the present invention is different from a broad orthogonal co-monomer distribution (BOCD) structure having the low content of SCBs derived from the comonomer in the low molecular weight region and the high content of SCBs in the high molecular weight region.

Specifically, the polyethylene resin composition according to the present invention has an NCD index of 0 or more, which is calculated according to Equation 1.

When the NCD index is 0 or more, i.e., a positive value, the composition has the NCD structure with the high content of SCBs derived from the comonomer in the low molecular weight region. On the contrary, when the NCD index is less than 0, i.e., a negative value, the composition has the BOCD structure with the low content of SCBs derived from the comonomer in the low molecular weight region and the high content of SCBs in the high molecular weight region. In addition, when the NCD index is less than 0, and the numerical value is closer to 0, the composition has a flat structure in which the SCB distribution is uniform.

When the NCD index is less than 0, i.e., a negative value, it is not the NCD structure, and as the numerical value is larger, the NCD characteristics are more deteriorated. In this case, stretchability deteriorates because the fluidity and chain entanglement of the low-molecular-weight tie molecules involved in microfibril formation are reduced during TD stretching after stretching in the MD direction.

More specifically, the polyethylene resin composition according to the present invention has an NCD index of 0 or more, or 0.5 or more, or 1 or more, or 1.5 or more, or 1.8 or more, or 1.82 or more, or 2 or more. On the contrary, when the NCD index exceeds 10, the density of the low molecular weight region during polymerization is very low, making it difficult to manufacture through a slurry process, or the average SCB content increases and the density decreases, resulting in deterioration of tensile strength, shrinkage characteristics, and heat resistance of the film. Therefore, the polyethylene resin composition may have an NCD index of 10 or less, or 8 or less, or 6 or less, or 5 or less, or 4 or less, or 3.9 or less, or 3 or less.

In the present invention, the NCD index of the polyethylene resin composition is calculated using the number of SCBs per 1000 carbons at log Mw = 5.5 and the number of SCBs per 1000 carbons at log Mw = 4.5, as defined in Equation 1, and these values may be obtained through GPC and FT-IR analysis of the polyethylene resin composition.

Specifically, the molecular weight distribution and the number of SCBs (short-chain branches, side branches having 2 to 7 carbon atoms per 1,000 carbons) according to each molecular weight may be determined through GPC and FT-IR analysis of the polyethylene resin composition. The detailed measurement method and measurement conditions are described in detail in Experimental Example.

Further, the polyethylene resin composition has a bimodal molecular weight distribution curve in the molecular weight distribution curve having a log value (log M) of a weight average molecular weight on the x-axis, and a molecular weight distribution (dwt/dlog M) with respect to the log value on the y-axis during GPC analysis.

In the present invention, the bimodal type of the molecular weight distribution curve means that the molecular weight distribution curve has two peaks on the GPC graph. In this regard, the case where the two peaks have independent peak shapes and do not exist separately, but partially overlap and exist as a shoulder peak where there is no minimum value between the maximum values of the two peaks, is also included as a peak. In other words, when it is not interpreted as a single peak forming a normal distribution and may be deconvoluted into two distributions, it is defined as the bimodal structure.

Such a bimodal molecular weight distribution means an increase in the low molecular weight and high molecular weight distributions in the polyethylene resin composition. Due to this molecular weight distribution structure, the polyethylene resin composition may exhibit improved physical properties, and in particular, may enhance the molecular structure shape that is advantageous for biaxial stretching, thereby exhibiting better stretchability, as compared to a polyethylene resin composition exhibiting a unimodal molecular weight distribution.

Further, during TREF analysis of the polyethylene resin composition, the content of the highly crystalline fraction eluted at an elution temperature of 100°C or higher, based on the total weight of all eluted fractions, is 35% by weight or more.

Due to the high content of the highly crystalline fraction, the polyethylene resin composition may exhibit excellent stiffness and heat resistance when manufacturing a stretched film. More specifically, during TREF analysis of the polyethylene resin composition, the content of the highly crystalline fraction eluted at an elution temperature of 100°C or higher, based on the total weight of all eluted fractions, may be 35% by weight or more, or 38% by weight or more, or 38.2% by weight or more, or 40% by weight or more, and 50% by weight or less, or 49.5% by weight or less, or 46% by weight or less.

Meanwhile, with regard to the polyethylene resin composition, the content ratio of the highly crystalline fraction eluted at an elution temperature of 100°C or higher is obtained by deriving a TREF analysis curve having the elution temperature (Te) (°C) on the x-axis and the elution amount (dw/dt) on the y-axis from the results of TREF analysis and calculating a weight ratio (highly crystalline fraction, T≥100°C) of the highly crystalline fraction eluted at an elution temperature of 100°C or higher, based on the total weight of all eluted fractions, from the TREF analysis curve.

Further, in the present invention, TREF analysis of the polyethylene resin composition may be performed in the range of -20°C to 130°C using PolymerChar's TREF device and trichlorobenzene as a solvent. For example, in the present invention, a cooling rate in the crystallization step during TREF analysis was set to 0.1°C/min. The detailed analysis method and conditions are described in detail in Experimental Example below.

Further, the polyethylene resin composition has a Z-average molecular weight (Mz) of 500,000 g/mol to 800,000 g/mol.

Among the various molecular weights representing the polyethylene resin composition, the Z-average molecular weight represents the content of the area corresponding to the tail at the high molecular weight side in the molecular weight distribution curve, i.e., the fraction (% by weight) of the high molecular weight tail with respect to the total weight of the polyethylene resin composition. The polyethylene resin composition of the present invention may exhibit better biaxial stretchability by having Mz in the above range. When Mz is less than 500,000 g/mol, the content of the high molecular weight tails is low, and there is a risk of breakage when stretching in the MD direction. When Mz is more than 800,000 g/mol, excessive ultra-high molecular weight chains form a gel that does not melt, which may act as a defect during the stretching process. More specifically, the polyethylene resin composition may have Mz of 500,000 g/mol or more, or 550,000 g/mol or more, 560,000 g/mol or more, or 570,000 g/mol or more, or 600,000 g/mol or more, or more than 600,000 g/mol, or 605,000 g/mol or more, 800,000 g/mol or less, or 700,000 g/mol or less, or 650,000 g/mol or less, or 637,000 g/mol or less, or 636,600 g/mol or less.

Meanwhile, the Z-average molecular weight (Mz) of the polyethylene resin composition is a value converted to standard polystyrene, which is measured through gel permeation chromatography analysis. The GPC analysis method and measurement conditions for measuring the Z average molecular weight are as described in Experimental Example below.

Further, the polyethylene resin composition has the number of SCBs per 1000 carbons of more than 3, and 8 or less.

With regard to the polyethylene resin composition, the number of SCBs per 1000 carbons influences crystallinity and crystal distribution of the composition. Therefore, when the number of SCBs is 3 or less, stretchability may deteriorate due to high crystallinity and low content of low-crystals, and when the number of SCBs is more than 8, the crystallinity may be excessively lowered and the tensile strength, shrinkage characteristics and heat resistance of the film may deteriorate. Further, when a polyethylene resin composition having the SCB content of more than 8 is prepared through a slurry polymerization process as in the present invention, the preparation is difficult due to process instability factors such as fouling, etc. in terms of the nature of the slurry process. More specifically, the number of SCBs per 1000 carbons of the polyethylene resin composition may be more than 3, or 3.1 or more, or 3.2 or more, or 3.3 or more, or 3.5 or more, 8 or less, or 7.9 or less, or 7 or less.

In the present invention, the short chain branch (SCB) refers to a branch-like short chain attached to the main chain of polyethylene, specifically, a short chain branch having 2 to 7 carbon atoms attached to the main chain of polyethylene. SCB is a short chain branch usually formed when using alpha olefins having 4 or more carbon atoms, such as 1-butene, 1-hexene, and 1-octene, etc., as comonomers, and its content may be proportional to the content of alpha olefinic monomers contained in the polymer chains. The SCB content refers to the number (unit: branches/1,000 C) of chain branches with 2 to 7 carbon atoms per 1,000 carbons, and may be determined by analysis using proton nuclear magnetic resonance (1H-NMR) or Fourier transform infrared spectroscopy (FT-IR). In the present invention, the SCB content was determined through FT-IR analysis, and the detailed analysis method is described in detail in Experimental Example below.

Further, the polyethylene resin composition according to the present invention has a high density of 0.940 g/cm³ to 0.965 g/cm³. Accordingly, it may exhibit excellent strength property. More specifically, the density of the polyethylene resin composition may be 0.940 g/cm³ or more, or more than 0.940 g/cm³, 0.945 g/cm³ or more, or 0.946 g/cm³ or more, or 0.947 g/cm³ or more, or 0.949 g/cm³ or more, or 0.950 g/cm³ or more, 0.965 g/cm³ or less, or less than 0.960 g/cm³, or 0.955 g/cm³ or less, or 0.954 g/cm³ or less, or 0.952 g/cm³ or less.

Meanwhile, the density of the polyethylene resin composition is a value measured in accordance with the ASTM D792 standard.

Further, the polyethylene resin composition according to the present invention shows a peak (β-relaxation peak) at -40°C to 10°C in a loss modulus graph according to temperature during dynamic mechanical analysis (DMA).

The β-relaxation peak that appears at -40°C to 10°C is attributed to the movement of polymer chains between lamellar crystals, and this increased fluidity may exhibit excellent stretchability when manufacturing a film.

Further, the polyethylene resin composition according to the present invention may further satisfy one or more, or two or more, or all five of the following requirements of (b1) to (b5), in addition to the physical property requirements described above:
(b1) a melt index (MI_{2.16}) (measured at 190°C under a load of 2.16 kg): 0.5 g/10 min to 3.0 g/10 min,
(b2) MFRR[5/2.16]: 3 to 5,
(b3) a weight average molecular weight (Mw): 80,000 g/mol to 130,000 g/mol,
(b4) a number average molecular weight (Mn): 5,000 g/mol to 15,000 g/mol, and
(b5) a polydispersity index [Mw/Mn]: 8 to 20.

Specifically, the polyethylene resin composition according to the present invention may have a melt index (MI_{2.16}) of 0.5 g/lOmin or more, and 3.0 g/lOmin or less, as measured at a temperature of 190°C under a load of 2.16 kg in accordance with the ASTM D1238 standard. More specifically, the melt index (MI_{2.16}) may be 0.5 g/10min or more, or 1 g/10min or more, or more than 1 g/lOmin, or 1.2 g/lOmin or more, or 1.21 g/10min or more, or 1.25 g/lOmin or more, or 1.28 g/lOmin or more, or 1.3 g/lOmin or more, and 3.0 g/lOmin or less, or 2.5 g/10min or less, or 2.0 g/lOmin or less, or 1.5 g/lOmin or less, or 1.49 g/lOmin or less, or 1.45 g/lOmin or less.

Further, the polyethylene resin composition may have MFRR (MI₅/MI_{2.16}) of 3 or more, and 5 or less, which is a ratio obtained by dividing a melt index (MI₅) measured at a temperature of 190°C under a load of 5 kg in accordance with the ASTM D1238 standard by a melt index (MI_{2.16}) measured at a temperature of 190°C under a load of 2.16 kg. More specifically, the MFRR (MI₅/MI_{2.16}) may be 3 or more, or 3.5 or more, or 3.9 or more, or 3.91 or more, or 4 or more, 5 or less, or 4.8 or less, or 4.5 or less, or 4.45 or less, or 4.43 or less, or 4.3 or less.

Further, the polyethylene resin composition may have a weight average molecular weight (Mw) of 80,000 g/mol or more, and 130,000 g/mol or less. More specifically, the weight average molecular weight may be 80,000 g/mol or more, or 90,000 g/mol or more, or 95,000 g/mol or more, or 98,000 g/mol or more, or 100,000 g/mol or more, and 130,000 g/mol or less, or 120,000 g/mol or less, or 110,000 g/mol or less, or 109,600 g/mol or less, or 109,000 g/mol or less.

Further, the polyethylene resin composition may have a number average molecular weight (Mn) of 5,000 g/mol or more, and less than 11,000 g/mol.

The number average molecular weight of the polyethylene resin composition influences the stretchability and physical properties of the resin composition. When the number average molecular weight is 11,000 g/mol or more, stretchability may deteriorate when manufacturing a film, and when the number average molecular weight is less than 5,000 g/mol, physical properties such as stiffness of the manufactured film may deteriorate.

Accordingly, the number average molecular weight (Mn) of the polyethylene resin composition may be more specifically 5,000 g/mol or more, or 5,500 g/mol or more, or 5,800 g/mol or more, or 6,000 g/mol or more, and less than 11,000 g/mol, or 10,500 g/mol or less, or 10,000 g/mol or less.

Further, the polyethylene resin composition may have a polydispersity index [Mw/Mn] of 8 or more, and 20 or less. More specifically, the polydispersity index may be 8 or more, or 10 or more, or 10.4 or more, or 11 or more, and 20 or less, or 17 or less, or 16.8 or less, or 15 or less.

Meanwhile, in the present invention, the weight average molecular weight (Mw) and the number average molecular weight (Mn) of the polyethylene resin composition may be determined through gel permeation chromatography (GPC) analysis, and each is a value converted to standard polystyrene. Further, the polydispersity index of the polyethylene resin composition may be calculated by dividing the weight average molecular weight (Mw) determined above by the number average molecular weight (Mn). The detailed measurement method and conditions are as described in Experimental Example below.

The polyethylene resin composition according to the present invention satisfies all of the above physical property requirements, thereby exhibiting excellent stretchability and physical properties. As a result, when manufacturing a biaxially stretched film, there is no concern about defects such as breakage or shrinkage, etc. during stretching in the TD direction, and the manufactured biaxially stretched film may exhibit excellent stretching ratio characteristics and tensile strength characteristics.

Further, the polyethylene resin composition according to the present invention specifically includes an ethylene/C4 to C10 alpha-olefin copolymer.

Specific examples of the C4 to C10 alpha-olefin monomer may include 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicocene, etc., and two or more thereof may be used.

The ethylene/C4 to C10 alpha-olefin copolymer may be specifically an ethylene/1-butene copolymer, an ethylene/1-hexene copolymer, an ethylene/1-octene copolymer, or an ethylene/1-butene/1-octene copolymer.

Meanwhile, the polyethylene resin composition according to the present invention as described above may be prepared by slurry polymerization using a plurality of reactors.

For example, the polyethylene resin composition may be prepared by a preparation method including:
a first step of preparing a first polyethylene by performing a first slurry polymerization reaction of ethylene and a first comonomer of a C4 to C10 alpha-olefin while introducing hydrogen in the presence of a Ziegler-Natta catalyst in a first reactor; and
a second step of transferring the first polyethylene to a second reactor which is connected to the first reactor, then introducing ethylene alone or ethylene and a C4 to C10 alpha olefin second comonomer, and performing a second slurry polymerization reaction,
wherein the input amount of the C4 to C10 alpha olefin first comonomer introduced during the first slurry polymerization reaction is larger than the input amount of the C4 to C10 alpha olefin second comonomer introduced during the second slurry polymerization reaction.

In the preparation method according to the present invention, a Ziegler-Natta polymerization catalyst is used, which is advantageous in forming a wide molecular weight distribution when preparing the polyethylene resin composition by a multimodal polymerization process using a plurality of reactors, and a slurry polymerization process is also used, which produces an ultra-high molecular weight tail in a GPC molecular weight distribution curve to form a wider molecular weight distribution, and the input amount of the comonomers introduced into the first and second reactors is controlled, and therefore, the prepared polyethylene resin composition satisfies all the physical property requirements of (a1) to (a6), and as a result, exhibiting excellent stretchability. In particular, when the input amount of the comonomer in the first polymerization reactor is higher than the input amount thereof in the second polymerization reactor, the content of SCB increases, which is a structure derived from the comonomer in the low molecular weight region of the prepared polyethylene resin composition, and fluidity of tie molecules between crystals increases. As a result, fibril formation is suppressed during the stretching process, and thus it may exhibit excellent stretchability, and in particular, may be more advantageous for stretching in the TD direction.

Specifically, the method of preparing the polyethylene resin composition according to the present invention is performed by multimodal slurry polymerization using a plurality of reactors. More specifically, two or more reactors, for example, two or more continuous stirred tank reactors (CSTR) may be used.

Further, with regard to the preparation method, the first reactor in which the first slurry polymerization reaction for preparing the first polyethylene occurs, and the second reactor which is connected to the first reactor and in which the second slurry polymerization reaction for preparing the second polyethylene occurs may be used. Accordingly, in the second reactor, the first polyethylene transferred from the first reactor is further polymerized by ethylene, or ethylene and the C4 to C10 alpha olefin second comonomer which are introduced into the second reactor, thereby forming an ethylene/alpha olefin copolymer.

Further, with regard to the preparation method, the polymerization process in the first and second reactors is performed by a slurry polymerization process.

In a solution polymerization, since a catalyst is activated through high-temperature and high-pressure reaction, catalyst decomposition and chain transfer are promoted, and the resulting resin composition has a narrow molecular weight distribution (MWD) and a low content of high molecular weight tail. Therefore, when the resin composition prepared by the solution polymerization is used to manufacture a film, it exhibits deteriorated stretchability, and in particular, breakage occurs when stretching in the MD direction. In contrast, in the slurry polymerization process of the present invention, the polymerization is performed at a relatively low temperature, and therefore, it is possible to secure a molecular structure that has a wide MWD and contains a large amount of high molecular weight tails required for a polyethylene resin composition for producing a transparent film. As a result, the composition may exhibit excellent biaxial stretchability.

Further, with regard to the preparation method according to the present invention, during the second slurry polymerization reaction, only ethylene may be introduced without the input of the comonomer during the second slurry polymerization reaction, or the input amount of the first comonomer introduced into the first slurry polymerization reaction may be larger than the input amount of the second comonomer introduced into the second slurry polymerization reaction. In this case, along with the bimodal molecular weight distribution, an NCD structure with a high content of SCBs derived from the comonomer in the low molecular weight region may be achieved. Due to the high SCB content in the low molecular weight region, fluidity of tie molecules between crystals increases, and as a result, fibril formation is suppressed during the stretching process, which may be more advantageous for stretching in the TD direction.

Specifically, a weight ratio of the second comonomer introduced during the second slurry polymerization process to the first comonomer introduced during the first slurry polymerization reaction (=the weight of the second comonomer introduced during the second slurry polymerization reaction/ the weight of the first comonomer introduced during the first slurry polymerization process) may be 0 or more and less than 1. When the weight ratio of the comonomers is 1 or more, a polyethylene resin composition that satisfies the physical properties requirements described above, particularly, the NCD index requirement, is not prepared. More specifically, the weight ratio of the comonomers is 0 (only ethylene monomer is introduced without the comonomer during the second slurry polymerization reaction), or the weight ratio may be more than 0, or 0.01 or more, or 0.05 or more, or 0.09 or more, or 0.1 or more, and less than 1, or 0.5 or less, or 0.4 or less, or 0.35 or less, or 0.3 or less.

Further, the total amount of ethylene and the total amount of comonomers introduced into the first and second reactors may satisfy a weight ratio of 1:0.001 to 1:0.1, more specifically, a weight ratio of 1:0.02 to 1:0.1, or 1:0.02 to 1:0.06, or 1:0.02 to 1:0.055. When the total amount of ethylene and the total amount of comonomers introduced into the first and second reactors satisfy the above range of weight ratio, it is possible to more easily achieve the physical properties of the polyethylene resin composition.

Further, with regard to the preparation method according to the present invention, the polymerization temperature (T1) and pressure (P1) during the first slurry polymerization reaction are higher than the polymerization temperature (T2) and pressure (P2) during the second slurry polymerization reaction. The bimodal molecular weight distribution and the NCD structure in the polyethylene resin composition may be more easily achieved by more increasing the temperature and pressure conditions during the first slurry polymerization reaction, in addition to controlling the input amount of the comonomers.

Specifically, a difference (T1-T2) between the polymerization temperature (T1) during the first slurry polymerization reaction and the polymerization temperature (T2) during the second slurry polymerization reaction may be 3°C or higher, or 4°C or higher, or 5°C or higher, and 10°C or lower, or 8°C or lower, or 6°C or lower.

Further, a difference (P1-P2) between the pressure (P1) during the first slurry polymerization reaction and the pressure (P2) during the second slurry polymerization reaction may be 2 kgf/cm² or more, or 3 kgf/cm² or more, or 3.2 kgf/cm² or more, and 6 kgf/cm² or less, or 5.5 kgf/cm² or less, or 5.3 kgf/cm² or less.

In addition, while satisfying the above-mentioned temperature difference and pressure difference, the polymerization temperature (T1) during the first slurry polymerization reaction is 70°C to 90°C, and the polymerization temperature (T2) during the second slurry polymerization reaction may be 70°C to 90°C in the preparation method according to the present invention.

Further, the pressure (P1) during the first slurry polymerization reaction is 5 kgf/cm² to 10 kgf/cm², and the pressure (P2) during the second slurry polymerization reaction may be 1 kgf/cm² to 5 kgf/cm².

Hereinafter, each step will be described in detail.

In the method of preparing the polyethylene resin composition according to the present invention, the first step is a step of preparing a first polyethylene by performing a first slurry polymerization reaction of ethylene and a first comonomer of a C4 to C10 alpha-olefin while introducing hydrogen in the presence of a Ziegler-Natta catalyst in a first reactor.

The Ziegler-Natta catalyst used to prepare the first polyethylene may specifically be a magnesium-supported titanium catalyst. Further, the magnesium-supported titanium catalyst may further include halogenated hydrocarbon.

Specifically, the magnesium-supported titanium catalyst includes a solid magnesium carrier. Examples of the magnesium carrier may include magnesium, magnesium oxide, magnesium chloride, silica-magnesia, magnesia, etc., and any one thereof or a mixture of two or more thereof may be used. Among them, considering catalytic activity and ease of realizing optimal physical properties of the polyethylene resin composition, the magnesium carrier may be magnesium.

Meanwhile, the magnesium-supported titanium catalyst includes a titanium-containing compound represented by the following Chemical formula (1) as a main catalyst:

[Chemical formula 1] Ti(OR¹)ₘX¹₄₋ₘ

in Chemical formula 1,
R¹ is the same or different and an alkyl group having 1 to 10 carbon atoms,
X¹ is a halogen atom, more specifically, Cl, Br, or I, and
m is an integer of 0 to 4.

In Chemical formula 1, R¹ may be specifically an alkyl group having 1 or more, or 2 or more, or 3 or more carbon atoms, and 10 or less, or 8 or less, or 5 or less carbon atoms.

Further, X¹ may be specifically Br or Cl, and more specifically Cl.

Specific examples of the titanium-containing compound may include titanium tetrachloride (TiCl₄) or chlorinated titanium oxide, and any one thereof or a mixture of both may be used.

Further, the catalyst including the titanium-containing compound may include Mg:Ti at a molar ratio of 1:1 to 10:1, or 2:1 to 7:1, or 4:1 to 5:1, based on the content of Mg in the magnesium carrier and the content of Ti in the titanium-containing compound. When included within the above molar ratio range, superior catalytic activity may be achieved.

Further, the shape of the catalyst is not particularly limited, but it may be, for example, in the form of spherical fine particles.

Further, the average particle size of the catalyst may be 5 µm to 100 µm, more specifically, 5 µm or more, or 8 µm or more, or 10 µm or more, and 100 µm or less, or 50 µm or less, or 20 µm or less, or 13 µm or less.

Meanwhile, the average particle size of the catalyst in the present invention may be measured by scanning electron microscopy (SEM) observation. Specifically, after obtaining an SEM image in which 100 or more catalyst particles are observed, a random straight line is plotted, and the average size of the catalyst particles may be calculated from the length of the corresponding straight line, the number of particles contained in the straight line, and the magnification.

Further, the magnesium-supported titanium catalyst may further include halogenated hydrocarbon.

Halogenated hydrocarbon changes the electrical properties of titanium by coordinating around titanium, which acts as an active point, and the large volume of halogenated hydrocarbon creates sufficient three-dimensional space between titanium atoms, thereby greatly improving catalytic activity during polyethylene polymerization.

The halogenated hydrocarbon may be specifically an alkane having 1 to 12 carbon atoms, a cycloalkane having 3 to 12 carbon atoms, an alkene having 2 to 12 carbon atoms, an alkyne having 2 to 12 carbon atoms, or an aromatic hydrocarbon having 6 to 30 carbon atoms, which is substituted with one or more halogen groups. The halogen group may be fluoro, chloro, or bromo.

Specific examples may include bromoform, tetrachloroethane, hexachloroethane, pentachloroethane, 1,1,2,2-tetrachloroethane, 1-bromo-1-chloroethane, 1,2-dibromoethane, 1,2-dichloroethane, bromoethane, hexachloropropane, 1,2,3-trichloropropane, 1,2-dichloropropane, 1-chloropropane, 2-chloropropane, chlorobutane, dichlorobutane, 1-chloro-2-methylpropane, n-butyl chloride, tert-butyl chloride, 1-chloro-3-methylbutane, 1-chloropentane, 1,5-dichloropentane, bromopentane, neopentyl chloride, 1-chloroheptane, cyclopropyl bromide, cyclobutyl chloride, cyclohexyl chloride, cyclohexyl bromide, vinylidene chloride, 1,2,3,3-tetrachloropropene, 1,2-dibromo-1-propene, 1,3-dichloropropene, hexachloro-1,3-butadiene, 2-bromo-2-butene, propargyl chloride, chlorobenzene, tetrachlorobenzene, trichlorobenzene, dichlorobenzene, 4-chlorobenzyl chloride, benzyl chloride, or 1,1-dichloro-2-phenylcyclopropane, etc., and any one thereof or a mixture of two or more thereof may be used.

The halogenated hydrocarbon may be included in an amount of 0.1 mol or more, or 0.12 mol or more, or 0.13 mol or more, and 500 mol or less, or 100 mol or less, or 50 mol or less, or 10 mol or less, or 1 mol or less, or 0.5 mol or less, based on 1 mol of the titanium-containing compound as the main catalyst.

The Ziegler-Natta catalyst may be prepared by a preparation method including a carrier treatment step of mixing and reacting a raw material of the magnesium carrier with alcohol; and a titanium-containing compound supporting step of reacting the product resulting from the above step with the titanium-containing compound represented by Chemical formula 1, and further including the step of bringing into contact with and reacting with halogenated hydrocarbon during the carrier treatment step and the titanium-containing compound supporting step, or after the titanium-containing compound supporting step. Accordingly, the method of preparing the polyethylene resin composition according to the present invention includes, before the first step, the step of preparing the Ziegler-Natta catalyst, specifically, the carrier treatment step and the titanium-containing compound supporting step, and may further include, during the carrier treatment step and the titanium-containing compound supporting step, or after the titanium-containing compound supporting step, the step of bringing into contact with and reacting with halogenated hydrocarbon may be further included.

Specifically, the carrier treatment step for preparing the Ziegler-Natta catalyst may be performed by mixing and reacting the raw material of the magnesium carrier with alcohol under in a non-polar solvent.

Specific examples of the alcohol may include methanol, ethanol, 1-propanol, isopropanol, n-butanol, isobutanol, 1-pentanol, isopentanol, n-hexanol, 1-octanol, 2-ethyl-1-hexanol, etc., and any one thereof or a mixture of two or more thereof may be used. Among them, ethanol or 2-ethyl-1-hexanol may be used.

The alcohol may be used in an amount of 1 mol or more, or 1.5 mol or more, or 2 mol or more, and 10 mol or less, or 8 mol or less, or 6 mol or less, based on 1 mol of the raw material of the magnesium carrier.

Meanwhile, the raw material of the magnesium carrier may include the magnesium carrier itself, such as magnesium, magnesium oxide, magnesium chloride, or silica-magnesia, etc.; or magnesium alcoholate such as magnesium ethylate, etc., and any one thereof or a mixture of two or more thereof may be used. For example, when magnesium alcoholate is used as the raw material of the magnesium carrier, it is converted into magnesium chloride by titanium tetrachloride (TiCl₄) which is introduced as the main catalyst, and is included as a carrier in the final prepared catalyst.

The method of mixing the raw material of the magnesium carrier with alcohol may be specifically performed by adding the alcohol to a slurry which is prepared by mixing the raw material of the magnesium carrier with a non-polar solvent such as hexane, or adding, to the slurry, a solution in which the alcohol is dissolved in a non-polar solvent, and then stirring the solution at a temperature of 20°C to 150°C until it becomes a transparent solution. As a result of the above mixing, a homogeneous solution of the magnesium carrier is obtained, and in the solution, an adduct is formed in which crystals of the magnesium carrier are surrounded by alcohol molecules.

Next, the step of supporting the titanium-containing compound for preparing the Ziegler-Natta catalyst is performed by reacting the reaction product of the magnesium carrier and alcohol, which is generated in the carrier treatment step, with the titanium-containing compound.

Specifically, to the reaction product of the magnesium carrier and alcohol, which is generated in the carrier treatment step, the titanium-containing compound is directly added or a solution in which the titanium compound is dissolved in a non-polar solvent is added, and reacted at -50°C to 120°C or -20°C to 80°C.

The type and content of the titanium-containing compound are as described above.

Further, when the titanium-containing compound is introduced, the reaction product of the magnesium carrier and alcohol, which is generated in the carrier treatment step, may be stirred at 10 rpm to 500 rpm, or 50 rpm to 400 rpm.

Meanwhile, when the Ziegler-Natta catalyst is prepared, halogenated hydrocarbon is introduced when alcohol is added to the magnesium carrier in the carrier treatment step; halogenated hydrocarbon is introduced when the titanium-containing compound is introduced in the titanium-containing compound supporting step; or after completing the step of supporting the titanium-containing compound, the step of adding and reacting halogenated hydrocarbon may be further performed.

The type and content of the halogenated hydrocarbon are as described above.

The Ziegler-Natta catalyst prepared through the above preparation method may be used as it is during polyethylene polymerization, or may be used as a slurry in a non-polar solvent.

Further, the Ziegler-Natta catalyst may be used together with an organometallic compound represented by the following Chemical formula 2 as a cocatalyst.

[Chemical formula 2] R²ₙMX²₍₃₋ₙ₎

in Chemical formula 2,
M is selected from the group consisting of elements of groups IB, IIA, IIIB and IVB in the periodic table,
R² is the same or different and is an alkyl group having 1 to 10 carbon atoms,
X² is halogen, and
n is an integer of 1 to 3.

In Chemical formula 2, M is specifically aluminum, R² is an alkyl group having 1 to 5 carbon atoms or 2 to 4 carbon atoms, and X² is Cl or Br.

Specific examples of the organometallic compound represented by Chemical formula 2 may include triethyl aluminum, methyl aluminum dichloride, methyl aluminum dibromide, dimethyl aluminum chloride, dimethyl aluminum bromide, propyl aluminum dichloride, propyl aluminum dibromide, butyl aluminum dichloride, butyl aluminum dibromide, dibutyl aluminum chloride, dibutyl aluminum bromide, isobutyl aluminum dichloride, isobutyl aluminum dibromide, diisobutyl aluminum chloride, diisobutyl aluminum bromide, hexyl aluminum dichloride, hexyl aluminum dibromide, dihexyl aluminum chloride, dihexyl aluminum bromide, octyl aluminum dichloride, octyl aluminum dibromide, dioctyl aluminum chloride, and dioctyl aluminum bromide, etc., and any one thereof or a mixture of two or more thereof may be used.

Meanwhile, since the cocatalyst affects the polymerization activity of the magnesium-supported catalyst, the polymerization activity of the catalyst may be further increased by controlling the content of cocatalyst. For example, with regard to the organometallic compound represented by Chemical formula 2, aluminum may be used in an amount of 3 mol or more, or 10 mol or more, or 25 mol or more, and 200 mol or less, or 100 mol or less per 1 mol of titanium in the catalyst.

The cocatalyst may be added to the polyethylene polymerization reaction after mixing with the Ziegler-Natta catalyst, or may be separately added before or after the addition of the Ziegler-Natta catalyst. Accordingly, the method of preparing the polyethylene resin composition according to the present invention may further include the step of adding the cocatalyst when preparing the first polyethylene in the first step.

Meanwhile, the polymerization reaction in the first step is a copolymerization reaction of ethylene and alpha olefin, and the input amounts of the monomers may be determined considering the physical properties of the first polyethylene and the final polyethylene resin composition to be achieved. For example, in the present invention, the content of the first comonomer of alpha olefin introduced into the first reactor may be 0.01% by weight to 5% by weight, based on the total weight of ethylene introduced into the first reactor. When introduced in the above content range, the combined physical properties of the polyethylene resin composition described above may be easily realized, and as a result, an increase in the stretching ratio in the TD direction may be realized due to an increase in the low molecular and low crystalline content ratio.

In addition, the polymerization reaction in the first step is performed under the condition of introducing hydrogen gas.

Since the input amount of hydrogen gas affects the physical properties of the prepared copolymer, the input amount is appropriately determined depending on the physical properties to be achieved. For example, in the present invention, the total input amount of hydrogen gas may be 0.001% by weight to 0.5% by weight, based on the total weight of monomers including ethylene and alpha olefin comonomer which are introduced into the first and second reactors. When hydrogen gas is introduced in the above range, the combined physical properties of the polyethylene resin composition described above may be easily achieved. More specifically, hydrogen gas may be introduced in an amount of 0.001% by weight or more, or 0.01% by weight or more, or 0.05% by weight or more, or 0.07% by weight or more, and 0.5% by weight or less, or 0.3% by weight or less, or 0.1% by weight or less.

Further, during the polymerization reaction in the first step, the temperature and pressure conditions are as previously defined.

The first polyethylene is prepared through polymerization reaction under the above preparation conditions.

Next, the second step is performed in the second reactor which is connected to the first reactor.

Specifically, the first polyethylene prepared in the first step is transferred to the second reactor which is connected to the first reactor, ethylene and the C4 to C10 alpha olefin second comonomer are introduced, and the second slurry polymerization reaction is performed.

In the second reactor, the additional polymerization reaction occurs between the first polyethylene transferred from the first reactor and the ethylene or the C4 to C10 alpha olefin second comonomer introduced into the second reactor.

The second slurry polymerization reaction may be carried out in the presence of a catalyst.

In this case, the applicable catalyst is a Ziegler-Natta catalyst, as described in the step 1. Accordingly, the Ziegler-Natta catalysts used in the first and second slurry polymerization reactions may be the same as or different from each other. When the same Ziegler-Natta catalyst is used in the first and second slurry polymerization reactions, it may be easier to control the physical properties of the polyethylene resin composition to be prepared, and accordingly, to achieve the above physical property requirements.

Further, the second slurry polymerization reaction may be carried out under conditions with hydrogen addition or without hydrogen addition. For example, when hydrogen gas is added, hydrogen gas may be added in an amount of 0.001% by weight to 0.05% by weight, based on the total weight of the monomers including the ethylene and the alpha olefin second comonomer introduced into the second reactor.

In addition, during the polymerization reaction in the second step, the temperature and pressure conditions are as defined above.

Meanwhile, the preparation method according to the present invention may further include the step of melting and extruding the obtained polymerization product after completing the polymerization reaction in the second step.

A pellet-type polyethylene resin composition may be prepared by the above melting and extrusion process.

Since the polymerization product after the polymerization reaction in the second step is obtained in the powder form, the types of applicable antioxidants are limited. Further, since the content of the antioxidants has large variations according to powder, articles manufactured using the same have large variations in their physical properties. In contrast, when the melting and extrusion process is performed, the components including antioxidants are uniformly mixed, and the resulting articles may have uniform physical properties.

Meanwhile, as used herein, a pellet or a pellet-type is a small particle or piece formed by extrusion of raw material, and includes all the shape classified as a pellet in the art, including circle, flat, flake, polygon, rod shapes, etc. The size of pellet is appropriately determined according to the use and shape, and is not specifically limited, but the pellet in the present invention is defined as having an average diameter of 2 mm or more so as to be distinguished from powder having a small average diameter of about 1 mm. In this regard, the "diameter" is the longest distance among any straight distances of the outer circumference surface of the pellet, and it may be measured using imaging microscope, etc.

The melt extrusion process may be performed using a common extruder, and the specific method and conditions thereof are not particularly limited as long as the morphological conditions of the pellet are satisfied.

In addition, during the melt extrusion, one or more additives such as antioxidants, neutralizing agents, slip agents, anti-blocking agents, UV stabilizers, antistatic agents, etc. may be added. Accordingly, the prepared polyethylene resin composition may further include one or more additives such as antioxidants, neutralizing agents, slip agents, anti-blocking agents, UV stabilizers, and antistatic agents, etc. Meanwhile, in the present invention, the additives do not affect the physical properties of the polyethylene resin composition, and may improve the processability and quality of manufactured articles when manufacturing the articles using the resin composition.

For example, the antioxidants may include phenolic antioxidants; phosphorus-based antioxidants; amine-based antioxidants, etc., and any one thereof or a mixture of two or more thereof may be used. Specific examples of the antioxidant may include phenolic antioxidants such as pentaerythritol tetrakis[3-(3,5-di-tert-butyl-4-hydroxyphenyl)propionate], or 1,3,5-trimethyl-2,4,6-tris(3,5-di-tert-butyl-4-hydroxybenzyl)benzene, etc.; phosphorus-based antioxidants such as tris(2,4-di-tert-butylphenyl)phosphite, bis(2,4-di-tert-butylphenyl)pentaerythritol diphosphite, and bis(2,4-dicumylphenyl)pentaerythritol diphosphite, etc.; or amine-based antioxidants such as phenylnaphthylamine, 4,4'-(α,α-dimethylbenzyl)diphenylamine, and N,N'-di-2-naphthyl-p-phenylenediamine, etc., and any one thereof or a mixture of two or more thereof may be used. In addition, commercially available Irganox^{™} 1010 (manufactured by BASF), Irganox^{™} 3114 (manufactured by BASF), Irganox^{™} 1076 (manufactured by BASF), Irgafos^{™} 168 (manufactured by BASF), Irgafos^{™} 626 (manufactured by BASF) or Cyanox^{™} 1790 (manufactured by CYTEC) may also be used. Among them, the polyethylene resin composition may include a mixture of a primary phenolic antioxidant and a secondary phosphorus-based antioxidant. In this regard, the primary phenolic antioxidant may be added in an amount of 50 ppm or more, or 200 ppm or more, or 250 ppm or more, and 500 ppm or less, or 300 ppm or less, based on the total weight of the polymerization product resulting from secondary polymerization. The secondary phosphorus-based antioxidant is added in an amount of 100 ppm or more, or 300 ppm or more, or 500 ppm or more, and 1000 ppm or less, or 700 ppm or less, based on the total weight of the polymerization product resulting from secondary polymerization. Therefore, the polyethylene resin composition may include the primary phenolic antioxidant in an amount of 50 ppm or more, or 200 ppm or more, or 250 ppm or more, and 500 ppm or less, or 300 ppm or less, and the secondary phosphorus-based antioxidant in an amount of 100 ppm or more, or 300 ppm or more, or 500 ppm or more, and 1000 ppm or less, or 700 ppm or less, based on the total weight of the resin composition.

Further, the neutralizing agent may include calcium stearate (Ca-St), calcium palmitate, zinc stearate, zinc palmitate, or hydrotalcite (magnesium aluminum hydroxy carbonate), etc., and any one thereof or a mixture of two or more thereof may be used. Further, commercially available DHT-4A (manufactured by KYOWA), etc. may be used. The neutralizing agent may be added in an amount of 100 ppm or more, or 300 ppm or more, or 500 ppm or more, and 1000 ppm or less, or 700 ppm or less, based on the total weight of the polymerization product resulting from secondary polymerization. Therefore, the polyethylene resin composition may include the neutralizing agent in an amount of 100 ppm or more, or 300 ppm or more, or 500 ppm or more, and 1000 ppm or less, or 700 ppm or less, based on the total weight of the resin composition.

Further, the melting and extrusion process may be performed according to common methods, for example, at an extrusion temperature of 180°C to 220°C, or 180°C to 210°C using an extruder such as a twin screw extruder.

The polyethylene resin composition satisfying the above-mentioned physical property requirements is prepared using the above-described preparation method. The prepared polyethylene resin composition exhibits excellent stretchability and physical properties, and there is no concern about defects such as breakage or shrinkage, etc. during stretching in the TD direction when manufacturing the biaxial stretched film. Further, the manufactured biaxial stretched film may exhibit excellent stretch ratio characteristics and tensile strength.

According to the present invention, provided are a composition for manufacturing a film, the composition including the above-described polyethylene resin composition, and a stretched film which is manufactured using the above-described polyethylene resin composition.

The composition for manufacturing a film may be prepared in the same manner as a common method of preparing the composition for manufacturing a film, except that the above-described polyethylene resin composition is included.

In addition, the composition for manufacturing a film may further include, in addition to the above-described polyethylene resin composition, other polyethylene resin compositions having different compositions or physical properties from the polyethylene resin composition. In this case, other polyethylene resin compositions may be included in a state of being mixed with the polyethylene resin composition, and its content may be appropriately determined depending on the purpose and physical properties to be achieved. For example, other polyethylene resin compositions may be included in an amount of more than 0% by weight and 40% by weight or less, based on the total weight of the composition for manufacturing a film.

Further, the stretched film may be specifically a biaxially stretched film.

The stretched film may be manufactured in the same manner as a common method of manufacturing a stretched film or biaxially stretched film, except that the above-described polyethylene resin composition is included.

The stretched film may exhibit excellent stretchability and strength properties by including the above-described polyethylene resin composition. Specifically, the stretched film according to the present invention may have a stretching ratio of 4 to 7 in the machine direction (MD) and a stretching ratio of 4 to 9 in the transverse direction (TD).

Further, the stretched film satisfies the following requirements of (b1) to (b3) when being stretched at a stretching ratio of 5X8(MDXTD) and having a thickness of 20 µm:
(b1) a haze measured in accordance with the ISO 13468 standard: 20% or less,
(b2) a tensile modulus of elasticity of 1000 MPa to 1500 MPa in MD direction and a tensile modulus of elasticity of 2000 MPa to 2500 MPa in TD direction, as measured according to the ASTM D882 standard, and
(b3) a shrinkage rate of 3 to 5 at 120°C in MD direction and a shrinkage rate of 7 to 10 in TD direction, as measured according to the ASTM D1204 standard.

Specifically, the stretched film has a haze of 20% or less, more specifically, 15% or less, or 12% or less, or 10% or less, measured according to the ISO 13468 standard, when being stretched at a stretching ratio of 5X8 and having a thickness of 20 µm. As the haze value is lower, the stretched film is better, and therefore, the lower limit is not limited, but may be, for example, 1% or more, or 3% or more.

Further, when the stretched film is stretched at a stretching ratio of 5X8 and has a thickness of 20 µm, a tensile modulus of elasticity in MD direction is 1000 MPa to 1500 MPa, more specifically 1000 MPa or more, or 1100 MPa or more, 1500 MPa or less, or 1400 MPa, and a tensile modulus of elasticity in TD direction is 2000 MPa to 2500 MPa, more specifically, 2000 MPa or more, or 2100 MPa or more, 2500 MPa or less, or 2400 MPa, as measured according to the ASTM D882 standard.

Further, when the stretched film is stretched at a stretching ratio of 5X8 and has a thickness of 20 µm, a shrinkage rate in MD direction at 120°C is 3 to 5, and a shrinkage rate in TD direction is 7 to 10, as measured according to the ASTM D1204 standard.

Hereinafter, preferred exemplary embodiments will be provided for better understanding of the present invention. However, the following exemplary embodiments are provided only for understanding the present invention more easily, but the content of the present invention is not limited thereby.

### <Preparation of Catalyst>

### Preparation Example 1

34 g of anhydrous magnesium chloride (99% by weight or more, a moisture content of less than 1%) was put in a 2 liter Buchi reactor dried with nitrogen, and 600 ml of purified hexane with a moisture content of less than 0.5 ppm was also put in the reactor. To the resulting reaction product, 175 ml of anhydrous 2-ethyl-1-hexanol was added under stirring, and then stirred at a temperature of 130°C for about 2 hours to prepare a homogeneous solution of magnesium carrier.

While stirring the homogeneous solution at a temperature of 35°C and a speed of 200 rpm, 200 ml of TiCl₄ was slowly added over 1 hour and stirred for another hour. In this process, a solid material was produced. After the solid material was precipitated, the liquid portion was removed, and the separated solid material was washed several times with hexane until the titanium concentration in the washing solution was 0.5 mmol or less. To the washed solid material, purified hexane was added to a total volume of 1 liter. The titanium concentration in the resulting hexane slurry was 30 mM. To the hexane slurry, 7 ml of cyclohexyl chloride was added at a temperature of 40°C, and stirred for 1 hour to obtain a Ziegler-Natta catalyst supported on magnesium.

The prepared catalyst included TiCl₄ as a main catalyst, and also included cyclohexyl chloride at a molar ratio of 0.13, based on 1 mol of the main catalyst. In addition, a molar ratio of Mg:Ti in the catalyst was 4: 1, and the average size of catalyst particles was 8 µm.

### Preparation Example 2

A Ziegler-Natta catalyst supported on magnesium was prepared in the same manner as in Preparation Example 1, except that anhydrous magnesium chloride was changed to magnesium ethylate.

The prepared catalyst included TiCl₄ as a main catalyst, and also included cyclohexyl chloride at a molar ratio of 0.13, based on 1 mol of the main catalyst. In addition, a molar ratio of Mg/Ti in the catalyst was 5:1, and the average size of catalyst particles was 10 µm.

### Preparation Example 3

A Ziegler-Natta catalyst supported on magnesium was prepared in the same manner as in Preparation Example 1, except that anhydrous 2-ethyl-1-hexanol was changed to ethanol.

The prepared catalyst included TiCl₄ as a main catalyst, and also included cyclohexyl chloride at a molar ratio of 0.13, based on 1 mol of the main catalyst. In addition, a molar ratio of Mg/Ti in the catalyst was 4.5:1, and the average size of catalyst particles was 13 µm.

### <Preparation of Polyethylene Resin Composition>

### Example 1

In a bimodal slurry process using two 100 L continuous stirred tank reactors (CSTR), a high density polyethylene resin composition was prepared by a method of preparing polyethylene by polymerization reaction in the presence of a Ziegler-Natta catalyst system.

In detail, in a first reactor, a first polyethylene was prepared by performing a primary polymerization reaction in the presence of ethylene, the Ziegler-Natta catalyst prepared in Preparation Example 1, an aqueous TEAL solution (30 mmol/hr) as a cocatalyst, hydrogen, and a first comonomer under conditions shown in Table 1 below.

Subsequently, in a second reactor, a second polymerization reaction was performed under conditions shown in Table 1 below. In this regard, the first polyethylene polymerized in the first reactor was fed to the second reactor connected in series to undergo secondary polymerization.

Based on the total weight of the polymerization product obtained as a result of the secondary polymerization, 250 ppm of BASF's Irganox 1010 as a primary antioxidant, 500 ppm of BASF's Irgafos 168 as a secondary antioxidant, and 500 ppm of calcium stearate (Ca-St) as a neutralizing were fed and mixed, and then extruded at an extrusion temperature of 190°C using a twin screw extruder (TEK 30 MHS, manufactured by SMPLATECH CO., diameter of 32 pi, LID = 40) to prepare a pellet-type polyethylene resin composition.

### Examples 2 to 6

Each polyethylene resin composition was prepared in the same manner as in Example 1, except that conditions were changed as in Table 1 below.

### Example 7

A polyethylene resin composition was prepared in the same manner as in Example 1, except that the Ziegler-Natta catalyst prepared according to Preparation Example 2 was used.

### Example 8

A polyethylene resin composition was prepared in the same manner as in Example 1, except that the Ziegler-Natta catalyst prepared according to Preparation Example 3 was used.

### Comparative Examples 1 to 3

Each polyethylene resin composition was prepared in the same manner as in Example 1, except that conditions were changed as in Table 2 below.

### Comparative Example 4

A polyethylene resin composition was prepared in the same manner as in Example 1, except that one continuous stirred tank reactor (CSTR) was used, and conditions were changed as in Table 2 below.

### Comparative Example 5

A polyethylene resin composition was prepared in the same manner as in Example 1, except that no comonomer was introduced during the first slurry polymerization reaction, and conditions were changed as in Table 2 below.

### Comparative Example 6

A polyethylene resin composition was prepared in the same manner as in Example 1, except that two solution polymerization reactors were used instead of two continuous stirred tank reactors (CSTR), and conditions were changed as in Table 2 below.

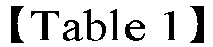

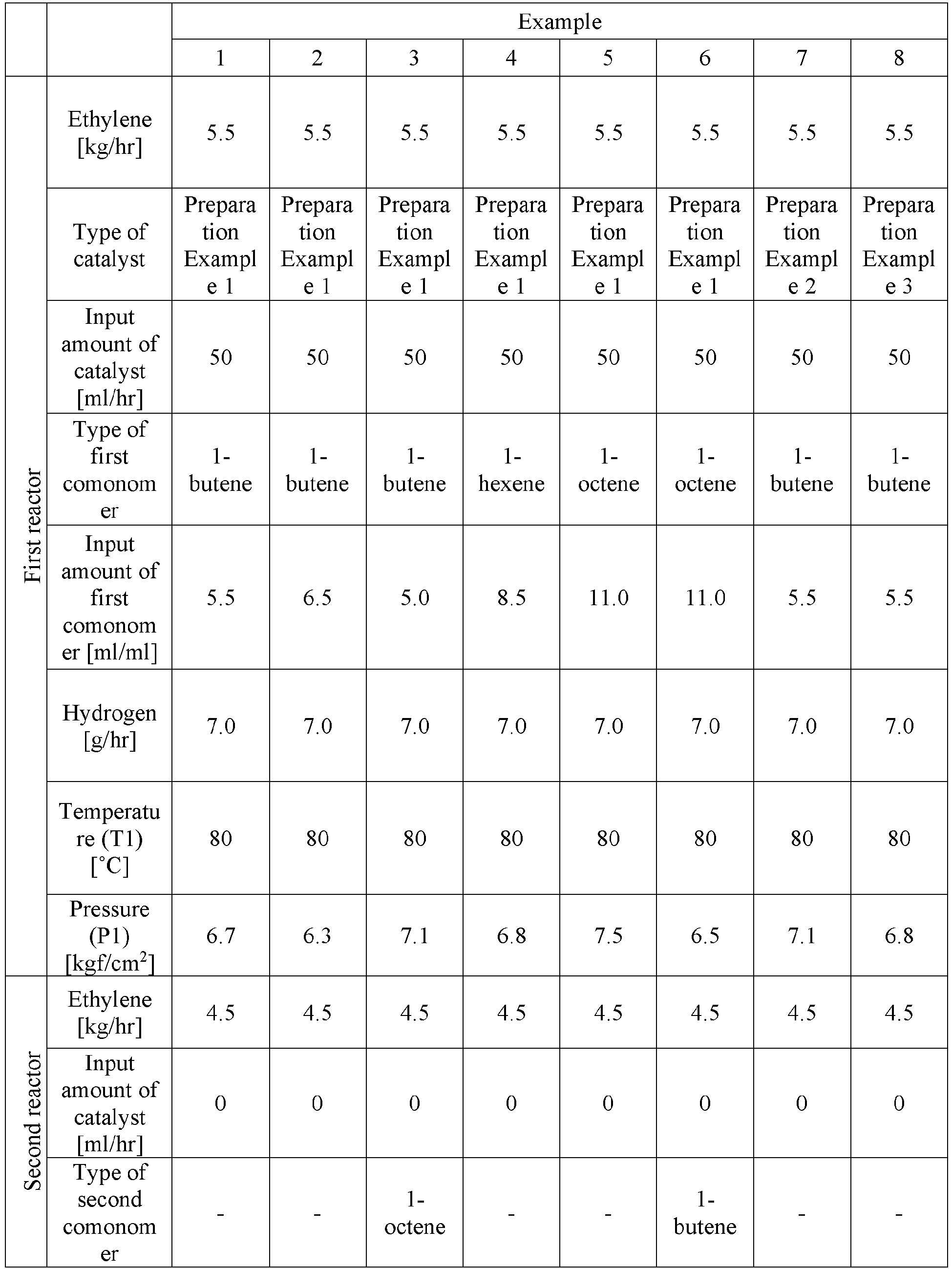

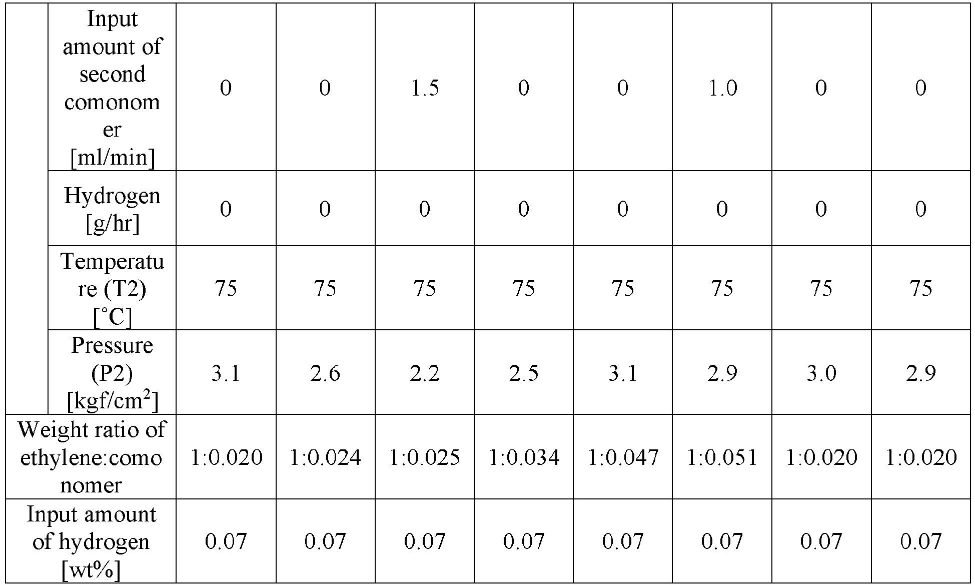

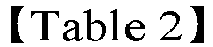

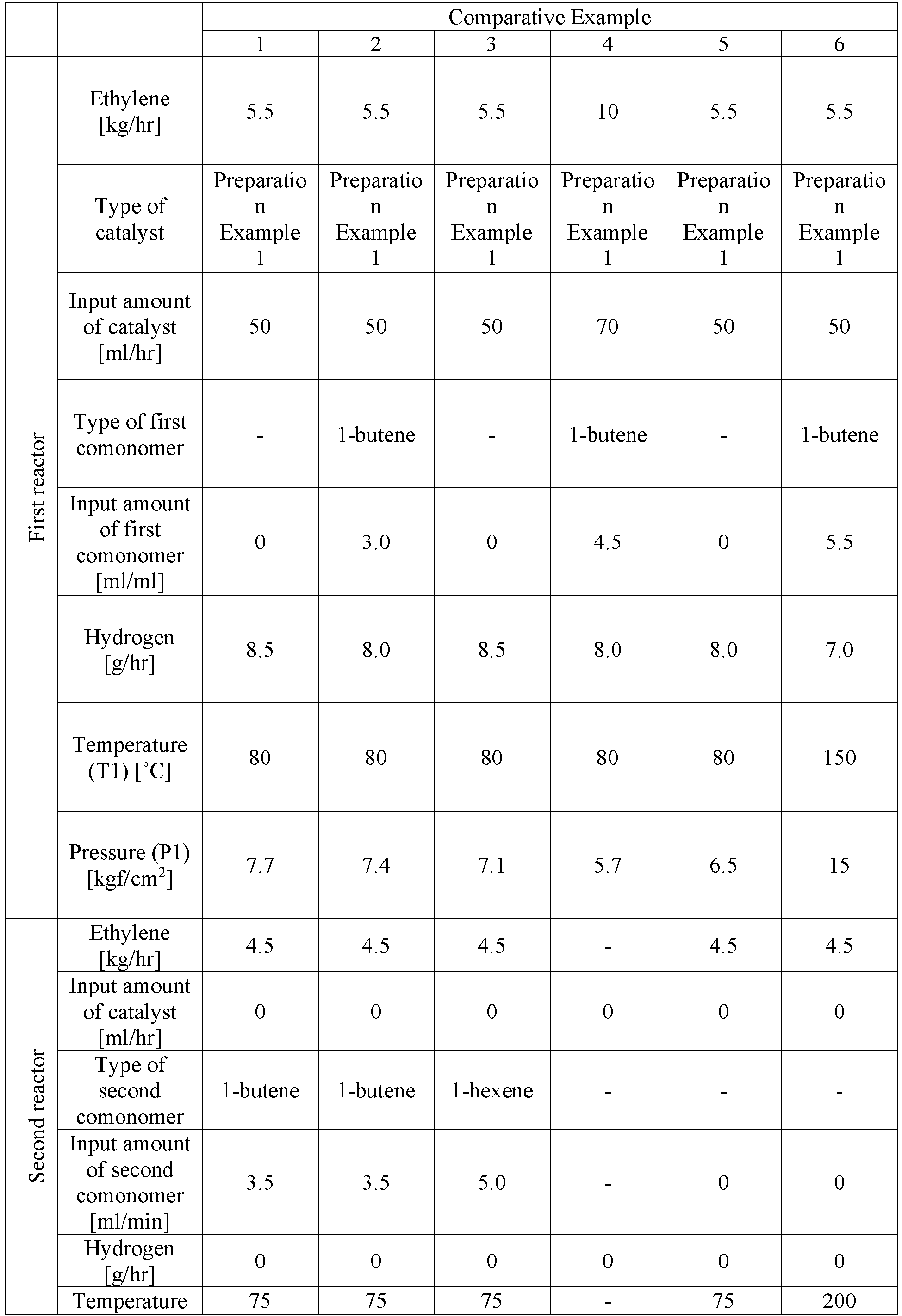

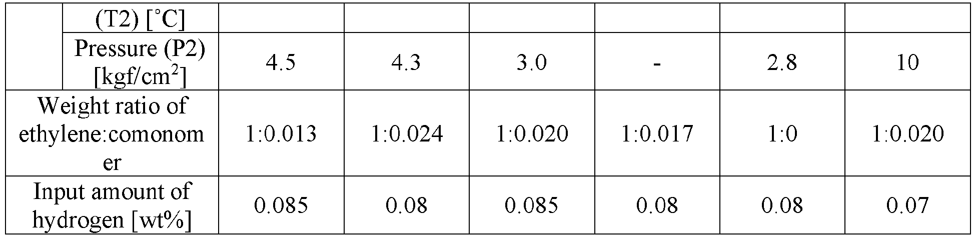

In Table 1, MI_{2.16} [g/10min] is a melt index value measured in accordance with the ASTM D1238 (Condition E, 190°C, under a load of 2.16 kg) standard for the first polyethylene produced through the polymerization reaction in the first reactor.

Further, the weight ratio of ethylene:comonomer is a weight ratio of the total amount of ethylene introduced into the first and second reactors and the total amount of comonomers including the first and second comonomers.

The input amount of hydrogen (wt%) is expressed as a percentage of the input amount of hydrogen, based on the total weight of ethylene introduced into the first and second reactors.

### Experimental Example 1

The physical properties of the polyethylene resin compositions prepared in Examples and Comparative Examples were measured as follows, and the results are shown in Tables 3 and 4 below, respectively.
(1) Density: measured in accordance with the ASTM D792 standard.
(2) Melt Index (MI_{2.16}): measured in accordance with the ASTM D1238 (condition E, 190°C, under a load of 2.16 kg) standard.
(3) MFRR(MI₅/MI_{2.16}): a ratio obtained by dividing MI₅ (ASTM D1238, 190°C, under a load of 5 kg) by MI_{2.16} (ASTM D1238, 190°C, under a load of 2.16 kg).
(4) Molecular weight (Mw, Mn, Mz) and Molecular weight distribution

A gel permeation chromatography (GPC) analysis was performed on the polyethylene resin compositions according to Examples and Comparative Examples to determine a weight average molecular weight (Mw, g/mol), a number average molecular weight (Mn, g/mol), and a Z-average molecular weight (Mz, g/mol), respectively, and the weight average molecular weight determined above was divided by the number average molecular weight to obtain a molecular weight distribution (Mw/Mn, MWD).

In detail, Waters's PL-GPC220 was used as the gel permeation chromatography (GPC) instrument, and a Polymer Laboratories PLgel MIX-B 300 mm length column was used. In this regard, the measurement temperature was 160°C, and 1,2,4-trichlorobenzene was used as a solvent, and measurement was performed at a flow rate of 1 mL/min. The polyethylene resin composition sample was pretreated by dissolving in 1,2,4-trichlorobenzene containing 0.025% BHT at 160^{°}C for 4 hours using a GPC analyzer (PL-GP220), and the sample was prepared at a concentration of 20 mg/10 mL, and then was supplied in an amount of 200 µL. Mw and Mn values were obtained using a calibration curve formed using polystyrene standards. 9 kinds of polystyrene standards were used, the polystyrene standards having a weight average molecular weight (g/mol) of 2,000 / 10,000 / 30,000 / 70,000 / 200,000 / 700,000 / 2,000,000 / 4,000,000 / 10,000,000.

Further, through the GPC analysis, a molecular weight distribution curve having a log value (log Mw) of a weight average molecular weight (Mw) (g/mol) on the x-axis, and a molecular weight distribution (dwt/dlogMw) with respect to the log value on the y-axis was plotted, and the shape of the molecular weight distribution curve was identified.

### 4) Content of Short Chain Branches (SCB; chain branches having 2 to 7 carbon atoms) (branches/1000C) and NCD index

The polyethylene resin composition sample was pretreated by dissolving in 1,2,4-Trichlorobenzene containing 0.025% BHT at 160 ^{°}C for 4 hours using PL-SP260, and the sample was prepared at a concentration of 20 mg/10 mL, and then was supplied in an amount of 200 µL. Measurements were performed under the following conditions using FT-IR which was connected to the GPC instrument (PL-GPC220, manufactured by Waters).

### <FT-IR measurement instrument and measurement conditions>

Measurement instrument: PerkinElmer Spectrum 100
Measurement temperature: 160°C
Wavenumber: 2700 cm⁻¹ to 3000 cm⁻¹
Number of scanning: 8
Resolution: 8 cm⁻¹
Detector: DTGS

Through the FT-IR analysis, a SCB distribution curve having a log value (log Mw) of a weight average molecular weight (Mw) (g/mol) on the x-axis, and the number of SCBs per 1000 carbons with respect to the log value on the y-axis was plotted.

Further, through the analysis, the number of SCBs per 1000 carbons at logMw=5.5 and the number of SCBs per 1000 carbons at logMw=4.5 were determined and used to obtain an NCD index according to the following Equation 1. NCD index = - (the number of SCBs per 1000 carbons at logMw = 5.5 - the number of SCBs per 1000 carbons at logMw = 4.5)

This represents a value obtained by multiplying the slope of the straight line connecting the y values (the number of SCBs) between 4.5 and 5.5 on the x-axis (log Mw) on the GPC and FT-IR curve by -1. When the polyethylene resin composition has an NCD structure, the slope value becomes negative because the SCB content at the low molecular weight region is higher. For this reason, the value was expressed as a positive number by multiplying by -1 in order to indicate that the NCD structure is enhanced as the NCD index has a positive value.

### (5) Content ratio of highly crystalline fraction

A temperature rising elution fractionation (TREF) analysis was performed on the polyethylene resin compositions of Examples and Comparative Examples in the following manner, and the content ratio (highly crystalline fraction, T≥100°C) of highly crystalline fraction eluted at an elution temperature of 100°C or higher was obtained.

TREF analysis of the polyethylene resin composition was performed in the range of - 20°C to 130°C using PolymerChar's TREF device and trichlorobenzene as a solvent. At this time, a cooling rate in the crystallization step was set to 0.1°C/min, and the analysis was performed under the following conditions.

In detail, 30 mg of the polyethylene resin composition sample was dissolved in 20 mL of trichlorobenzene at 150°C for 60 minutes, and stabilized at 140°C for 20 minutes. The sample was introduced into a TREF column, and then cooled to -20°C at a cooling rate of 0.1°C/min, and maintained for 2 minutes. Thereafter, the solvent trichlorobenzene was applied to the column at a flow rate of 0.5 mL/min while heating from -20°C to 130°C at a heating rate of 1°C/min, and then the concentration of the eluted polymer was measured.

### <TREF analysis conditions>

Dissolution Rate: 40°C/min
Stabilization Rate: 40°C/min
Crystallization Rate 1: 0.1°C/min
Elution Rate: 1°C/min
Cleaning rate: 30°C/min
Dissolution temperature: 150°C
Stabilization temperature: 140°C
Crystallization temperature: 35°C
Elution init temp.: 35°C
Elution temperature: 140°C
Post elution temperature: 150°C
Cleaning temperature: 150°C
Dissolution time: 60 min
Stabilization time: 20 min
Crystallization time: 10 min
Pre-injection time: 10 min
Soluble Fraction time: 10 min
post elution time: 10 min
Cleaning time: 10 min

### Cleaning cycles: 1

- Content ratio of highly crystalline fraction (T≥100°C) (wt%): through the TREF analysis, a TREF analysis curve having the elution temperature (Te) (°C) on the x-axis and the elution amount (dw/dt) on the y-axis was derived, and a content ratio (wt%) of the highly crystalline fraction eluted at an elution temperature of 100°C or higher, based on the total weight of all eluted fractions, was calculated from the TREF analysis curve.

**[Table 3]**

| | Example | | | | | | | |
|---|---|---|---|---|---|---|---|---|
| | 1 | 2 | 3 | 4 | 5 | 6 | 7 | 8 |
| MI_{2.16} [g/10min] | 1.21 | 1.30 | 1.32 | 1.41 | 1.28 | 1.49 | 1.35 | 1.45 |
| MFRR [5/2.16] | 4.43 | 4.25 | 3.91 | 4.01 | 3.98 | 4.05 | 4.12 | 4.08 |
| Density [g/cm³] | 0.954 | 0.950 | 0.947 | 0.950 | 0.949 | 0.946 | 0.952 | 0.951 |
| Type of molecular weight distribution curve in GPC analysis | Bimoda 1 | Bimoda 1 | Bimoda 1 | Bimoda 1 | Bimoda 1 | Bimoda 1 | Bimoda 1 | Bimoda 1 |
| Mw [g/mol] | 108,783 | 109,542 | 108,435 | 100,631 | 107,645 | 99,631 | 101,987 | 98,156 |
| Mn [g/mol] | 8,565 | 8,114 | 10,426 | 8,316 | 9,967 | 9,057 | 6,799 | 5,843 |
| Mz [g/mol] | 615,687 | 632,408 | 560,135 | 620,424 | 636,540 | 608,564 | 618,546 | 573,159 |
| Polydispersit y [Mw/Mn] | 12.7 | 13.5 | 10.4 | 12.1 | 10.8 | 11.0 | 15.0 | 16.8 |
| SCB content [/1000C] | 3.5 | 4.4 | 7.9 | 3.7 | 3.3 | 6.4 | 3.8 | 4.2 |
| NCD index | 2.42 | 1.82 | 3.90 | 2.13 | 1.86 | 2.75 | 2.13 | 2.56 |
| Number of SCB per 1000 carbons at logMw=5.5 | 1.47 | 3.04 | 5.35 | 2.32 | 1.89 | 4.59 | 2.43 | 2.30 |
| Number of SCB per 1000 carbons at logMw=4.5 | 3.88 | 4.78 | 9.25 | 4.19 | 3.75 | 7.34 | 4.56 | 4.86 |
| Content of highly crystalline fraction (wt%) | 49.5 | 45.7 | 41.7 | 43.3 | 42.2 | 38.2 | 44.8 | 43.5 |

**[Table 4]**

| | Comparative Example | | | | | |
|---|---|---|---|---|---|---|
| | 1 | 2 | 3 | 4 | 5 | 6 |
| MI_{2.16} [g/10min] | 0.91 | 1.36 | 1.11 | 1.08 | 0.90 | 1.28 |
| MFRR [5/2.16] | 3.89 | 3.93 | 4.30 | 3.23 | 4.16 | 3.78 |
| Density [g/cm³] | 0.953 | 0.946 | 0.952 | 0.948 | 0.957 | 0.950 |
| Type of molecular weight | Bimodal | Bimodal | Bimodal | Unimodal | Bimodal | Bimodal |
| distribution curve in GPC analysis | | | | | | |
| Mw [g/mol] | 131,893 | 103,158 | 6,005 | 110,567 | 9,474 | 8,940 |
| Mn [g/mol] | 9,354 | 7,475 | 123,592 | 16,502 | 106,734 | 118,820 |
| Mz [g/mol] | 874,298 | 628,465 | 789,756 | 505,296 | 615,678 | 486,123 |
| Polydispersity [Mw/Mn] | 14.1 | 13.8 | 20.6 | 6.7 | 11.3 | 9.1 |
| SCB content [/1000C] | 4.0 | 4.7 | 5.8 | 3.5 | 3.0 | 3.8 |
| NCD index | -0.57 | -0.13 | -1.89 | 0.23 | -0.12 | 1.01 |
| Number of SCB per 1000 carbons at logMw=5.5 | 4.91 | 4.97 | 7.83 | 3.48 | 3.06 | 3.60 |
| Number of SCB per 1000 carbons at logMw=4.5 | 4.34 | 4.84 | 5.94 | 3.71 | 2.94 | 4.61 |
| Content of highly crystalline fraction (wt%) | 47.5 | 42.1 | 45.7 | 32.7 | 62.5 | 34.2 |

As a result of the experiment, the polyethylene resin compositions of Examples 1 to 8 had an NCD index of 0 or more together with a bimodal molecular weight distribution, indicating that they had the NCD structure with a high content of SCBs derived from the comonomer in the low molecular weight region.

In contrast, Comparative Examples 1 to 3, and 5 showed a bimodal molecular weight distribution, but had an NCD index of a negative value of less than 0, indicating that they had a broad orthogonal co-monomer distribution (BOCD) structure with a low content of SCBs derived from the comonomer in the low molecular weight region and a high content of SCBs in the high molecular weight region or the flat structure in which the SCB distribution is uniform.

Further, the polyethylene resin composition of Comparative Example 4 showed a unimodal molecular weight distribution and a flat comonomer distribution.

Further, since the polyethylene resin composition of Comparative Example 6 was prepared by the solution polymerization process, it showed a low Mz and a low content of highly crystalline fraction.

### Experimental Example 2

For the polyethylene resin composition prepared in Examples 3 and 6 and Comparative Example 1, changes in loss modulus according to the temperature of the specimen were measured through dynamic mechanical analysis (DMA).

In detail, each of the polyethylene resin composition samples of Examples 3 and 6 and Comparative Example 1 was pressed at 190°C to prepare a rectangular specimen with a thickness of 0.5 mm, a width of 6 mm, and a length of 30 mm.

Each prepared specimen was mounted on a film tension clamp (gap: 10 mm) of a TA Instruments Q850 DMA, heated from -50°C to 140°C at a rate of 3°C/min, and after applying sinusoidal vibration input with a frequency of 1 Hz and shearing deformation of 5% deformation amplitude, the loss modulus (MPa) was measured from the output response characteristics shown on the plate. From the results, a graph of changes in the loss modulus according to temperature was obtained and shown in FIG. 1.

As shown in the graph of loss modulus according to temperature in FIG. 1, peaks appear at -40°C to 10°C, which are caused by the movement of polymer chains between lamellar crystals (β-relaxation).

In general, at similar densities, the higher the content of comonomer-derived structures in the low molecular weight region, the greater the chain fluidity between lamellar crystals. As compared to that of Comparative Example 1, the polyethylene resin compositions of Examples 3 and 6 showed a β-relaxation peak in the corresponding region. From these results, it may be expected that the polyethylene resin compositions of Examples 3 and 6 with the NCD structure are more advantageous for biaxial stretching during film production.

### Experimental Example 3

A biaxially stretched film was manufactured using each of the polyethylene resin compositions prepared in Examples 1 to 8 and Comparative Examples 1 to 6, and stretchability was evaluated.

### (1) Production of biaxially stretched film

- A cast sheet of the polyethylene resin composition was produced at a thickness of 0.72 mm using Bruckner's lab extruder line (LID ratio: 42, Screw diameter: 25 mm, Melt/T-Die temperature: 250°C).
- Biaxial stretching was performed to produce a polyethylene resin composition sheet with a width x a height of 90 mm x 90 mm using KARO 5.0 machine.
- Stretching (MD → TD) was sequentially performed after preheating for 100 seconds at 120°C, respectively.
- When stretching, the speed was 300%/s.
- Final film thickness (based on stretching ratio of 5X8 times): 20 µm

### (2) Evaluation of stretchability

The casting film manufactured in (1) was biaxially stretched while varying the stretching ratio in the MD/TD directions as shown in Table 5 below, and stretchability was evaluated according to the following criteria.

### <Evaluation criteria>

O: Stretchable, excellent appearance characteristics without defects
Δ: Stretchable, but poor appearance characteristics due to variation in film thickness
X: Not stretchable due to breakage

**[Table 5]**

| Stretching ratio in MD/TD directions | Example | | | | | | | | Comparative Example | | | | | |
|---|---|---|---|---|---|---|---|---|---|---|---|---|---|---|
| | 1 | 2 | 3 | 4 | 5 | 6 | 7 | 8 | 1 | 2 | 3 | 4 | 5 | 6 |
| 4 X 4 | O | O | O | O | O | O | O | O | O | O | O | O | X | O |
| 4 X 6 | O | O | O | O | O | O | O | O | O | O | O | O | X | O |
| 5 X 7 | O | O | O | O | O | O | O | O | X | O | O | X | X | O |
| 5 X 8 | O | O | O | O | O | O | O | O | X | Δ | Δ | X | X | O |
| 6 X 8 | Δ | O | O | O | O | O | O | O | X | X | X | X | X | Δ |
| 6 X 9 | X | O | O | O | O | O | Δ | Δ | X | X | X | X | X | X |

### (3) Evaluation of film properties (evaluation of tensile modulus of elasticity, haze, and shrinkage rate)

Each biaxially stretched film with a stretching ratio of 5X8 and a thickness of 20 µm was manufactured using the polyethylene resin compositions of Examples 1 to 6, and Comparative Example 6 in the same manner as in (1), and then tensile modulus of elasticity (1% Elastic modulus) of each film was measured in accordance with the ASTM D882 standard.

Further, a haze of each film was measured in accordance with the ISO 13468 standard, and a shrinkage rate was evaluated in accordance with the ASTM D1204 standard.

**[Table 6]**

| | Example 1 | Example 2 | Example 3 | Example 4 | Example 5 | Example 6 | Compara tive Example 6 |
|---|---|---|---|---|---|---|---|
| MD tensile modulus of elasticity (MPa) | 1392 | 1203 | 1197 | 1218 | 1287 | 1296 | 1098 |
| TD tensile modulus of elasticity (MPa) | 2318 | 2177 | 2231 | 2251 | 2130 | 2289 | 1806 |
| Haze (%) | 12 | 5 | 3 | 10 | 9 | 4 | 28 |
| shrinkage rate (MD/TD, 120°C) | 3/7 | 4/9 | 5/10 | 4/9 | 4/8 | 5/10 | 4/11 |

As a result of the experiment, the polyethylene resin compositions of Examples 1 to 6 according to the present invention showed significantly improved stretchability, as compared to the resin compositions of Comparative Examples 1 to 5, except for Comparative Example 6. The stretched films manufactured using the polyethylene resin compositions of Examples 1 to 6 also showed improved tensile strength characteristics and excellent shrinkage characteristics and transparency.

In contrast, the resin composition of Comparative Example 6 showed the same level of stretchability as that of Example 1, when manufacturing the stretched film. However, due to the low content of highly crystalline fraction, the stretched film manufactured using the same showed great deterioration in terms of tensile strength, haze, and shrinkage characteristics, as compared to the stretched films of Examples.

## Claims

1. A polyethylene resin composition satisfying the following requirements of (a1) to (a6):
(a1) a density measured in accordance with ASTM D792 standard: 0.940 g/cm³ to 0.965 g/cm³,
(a2) an NCD index calculated according to the following Equation 1: 0 or more,
(a3) a type of a molecular weight distribution curve, when plotting the molecular weight distribution curve having a log value (log M) of a weight average molecular weight (M) (g/mol) on x-axis, and a molecular weight distribution (dwt/dlog M) with respect to the log value on y-axis during a gel permeation chromatography analysis: bimodal,
(a4) a content of a highly crystalline fraction eluted at an elution temperature of 100°C or higher, based on a total weight of all eluted fractions, during a temperature rising elution fractionation analysis: 35% by weight or more,
(a5) a Z-average molecular weight (Mz): 500,000 g/mol to 800,000 g/mol,
(a6) a number of SCBs per 1000 carbons: more than 3 and 8 or less, NCD index = - (the number of SCBs per 1000 carbons at logMw = 5.5 - the number of SCBs per 1000 carbons at logMw = 4.5)
in Equation 1, Mw represents a weight average molecular weight (g/mol), and SCB represents short chain branches having 2 to 7 carbon atoms which are attached to main chain of polyethylene.

2. The polyethylene resin composition of claim 1, wherein the polyethylene resin composition shows a β-relaxation peak at -40°C to 10°C in a loss modulus graph according to temperature during dynamic mechanical analysis.

3. The polyethylene resin composition of claim 1, wherein a melt index (MI_{2.16}) of the polyethylene resin composition is 0.5 g/10 min to 3.0 g/10 min, as measured at a temperature of 190°C under a load of 2.16 kg in accordance with ASTM D1238 standard.

4. The polyethylene resin composition of claim 1, wherein MFRR (MI₅/MI_{2.16}) of the polyethylene resin composition which is a ratio obtained by dividing a melt index (MI₅) measured at a temperature of 190°C under a load of 5 kg by a melt index (MI_{2.16}) measured at a temperature of 190°C under a load of 2.16 kg in accordance with ASTM D1238 standard, is 3 to 5.

5. The polyethylene resin composition of claim 1, wherein a weight average molecular weight (Mw) of the polyethylene resin composition is 80,000 g/mol to 130,000 g/mol.

6. The polyethylene resin composition of claim 1, wherein a number average molecular weight (Mn) of the polyethylene resin composition is 5,000 g/mol or more, and less than 11,000 g/mol.

7. The polyethylene resin composition of claim 1, wherein a polydispersity index [Mw/Mn] of the polyethylene resin composition is 8 to 20.

8. The polyethylene resin composition of claim 1, comprising an ethylene/C4 to C10 alpha-olefin copolymer.

9. The polyethylene resin composition of claim 8, wherein the ethylene/C4 to C10 alpha-olefin copolymer is an ethylene/1-butene copolymer, an ethylene/1-hexene copolymer, an ethylene/1-octene copolymer, or an ethylene/1-butene/1-octene copolymer.

10. A method of preparing the polyethylene resin composition of claim 1, the method comprising:
a first step of preparing a first polyethylene by performing a first slurry polymerization reaction of ethylene and a first comonomer of a C4 to C10 alpha-olefin while introducing hydrogen in the presence of a Ziegler-Natta catalyst in a first reactor; and
a second step of transferring the first polyethylene to a second reactor which is connected to the first reactor, then introducing ethylene alone, or ethylene and a C4 to C10 alpha olefin second comonomer, and performing a second slurry polymerization reaction,
wherein an input amount of the first comonomer introduced during the first slurry polymerization reaction is larger than an input amount of the second comonomer introduced during the second slurry polymerization reaction.

11. The method of claim 10, wherein a weight ratio of the second comonomer introduced during the second slurry polymerization process to the first comonomer introduced during the first slurry polymerization reaction is 0 or more and less than 1.

12. The method of claim 10, wherein polymerization temperature (T1) and pressure (P1) during the first slurry polymerization reaction are higher than polymerization temperature (T2) and pressure (P2) during the second slurry polymerization reaction.

13. The method of claim 12, wherein the polymerization temperature (T1) during the first slurry polymerization reaction is 70°C to 90°C, and the polymerization temperature (T2) during the second slurry polymerization reaction is 70°C to 90°C.

14. The method of claim 12, wherein the pressure (P1) during the first slurry polymerization reaction is 5 kgf/cm² to 10 kgf/cm², and the pressure (P2) during the second slurry polymerization reaction is 1 kgf/cm² to 5 kgf/cm².

15. The method of claim 10, wherein the Ziegler-Natta catalyst used in the first slurry polymerization reaction is a magnesium-supported titanium catalyst.

16. The method of claim 10, wherein the Ziegler-Natta catalyst used in the first slurry polymerization reaction further comprises a halogenated hydrocarbon.

17. The method of claim 16, wherein the halogenated hydrocarbon is bromoform, tetrachloroethane, hexachloroethane, pentachloroethane, 1,1,2,2-tetrachloroethane, 1-bromo-1-chloroethane, 1,2-dibromoethane, 1,2-dichloroethane, bromoethane, hexachloropropane, 1,2,3-trichloropropane, 1,2-dichloropropane, 1-chloropropane, 2-chloropropane, chlorobutane, dichlorobutane, 1-chloro-2-methylpropane, n-butyl chloride, tert-butyl chloride, 1-chloro-3-methylbutane, 1-chloropentane, 1,5-dichloropentane, bromopentane, neopentyl chloride, 1-chloroheptane, cyclopropyl bromide, cyclobutyl chloride, cyclohexyl chloride, cyclohexyl bromide, vinylidene chloride, 1,2,3,3-tetrachloropropene, 1,2-dibromo-1-propene, 1,3-dichloropropene, hexachloro-1,3-butadiene, 2-bromo-2-butene, propargyl chloride, chlorobenzene, tetrachlorobenzene, trichlorobenzene, dichlorobenzene, 4-chlorobenzyl chloride, benzyl chloride, or 1,1-dichloro-2-phenylcyclopropane.

18. A stretched film comprising the polyethylene resin composition of claim 1.

19. The stretched film of claim 18, wherein the stretched film has a stretching ratio of 4 to 7 in machine direction (MD) and a stretching ratio of 4 to 9 in transverse direction (TD).

20. The stretched film of claim 18, wherein the stretched film satisfies the following requirements of (b1) to (b3), when being stretched at a stretching ratio of 5X8 and having a thickness of 20 µm:
(b1) a haze measured according to ISO 13468 standard: 20% or less,
(b2) a tensile modulus of elasticity of 1000 MPa to 1500 MPa in MD direction and a tensile modulus of elasticity of 2000 MPa to 2500 MPa in TD direction, measured according to ASTM D882 standard, and
(b3) a shrinkage rate of 3 to 5 in MD direction and a shrinkage rate of 7 to 10 in TD direction, measured at 120°C according to ASTM D1204 standard.
